# EUROPEAN PATENT APPLICATION

(11) **EP 4 520 148 A2**
(43) Date of publication of application: **12.03.2025**
(21) Application number: 25153562.1
(22) Date of filing: 11.06.2019
(51) Int. Cl.: A01B 15/02

(54) **PLOUGH SOLE BREAKER**

(62) Divisional of application: 19179407.2
(71) Applicant: Kverneland Group Operations Norway AS, 4353 Klepp Stasjon (NO)
(72) Inventor: Skjønsberg, Simen, 4322 Sandnes (NO); Werner, Dag Arne, 4013 Stavanger (NO); Bryne, Bjørn, 4340 Bryne (NO); Hansen, Truls Olve Terjesønn, 7560 Vikhammer (NO)
(74) Representative: Håmsø Patentbyrå AS

(57) **Abstract**

A plough sole breaker (1) arranged to be connected to a plough body (21), extendable below a working depth of the plough body (21), the plough sole breaker (1) comprising: a bracket (11) arranged to be attached to the plough body (21), a forward portion (111) of the bracket (11) comprising attachment means (12), wherein the bracket (11) is provided with a forward end portion (111) and a rear end portion (112); and the bracket (11) is arranged to extend rearwardly from a land side (215) the plough body (21); and a tine (13) being connected to a rear end portion (112) of the bracket (11), wherein the tine (13) is pivotal about a transverse, horizontal axis (137) between a first orientation (PI), where the tine (13) is in an active working state extending downwardly, and a second orientation (PII, PIIA), where the tine (13) is in an inactive idle state facing away from the first orientation (PI).

## Description

The present invention relates to a plough sole breaker arranged to be connected to a plough body, extendable below a working depth of the plough body, the plough sole breaker comprising a bracket arranged to be attached to the plough body, a forward portion of the bracket comprising attachment means, and a tine being connected to a rear end portion of the bracket.

For various reasons a soil pan may appear, causing troubles for the cultivation and growth of a crop. The appearance may result from repeated soil preparation to the same depth, causing a so-called plough sole to be created, or from fine-grained material tending to flow with rain water or irrigation water, precipitating below the soil surface, thus creating a hard pan which is difficult to penetrate for plant roots and also leaving the underground inaccessible for the rain water and irrigation water, causing the crop to suffer from draught or flood.

From FR2541847 A1 is known a device for breaking or fragmenting the plough sole. A device is fastened directly to the plough, makes it possible to break the said plough sole in a single operation and simultaneously with the action of the plough. From a plate fastened to the rear part of the ploughshare beam an inwardly curved tooth provided with a small ploughshare or wear plate is projecting underneath the level of the plough share.

US2395342 A discloses tripping mechanism for an earth-working tool such as a cultivator, wherein a tine shank is pivotally attached to a stem about a horizontal pin, the shank being held in a working position by a coiled spring and a shear strip resting against a shoulder on a shank body.

From US2634665A is known a spring-controlled shovel mount for a cultivator, wherein a cultivator shovel is supported on a staff. The shovel is held in position by a trip mechanism allowing the shovel to retract when striking an obstruction. Shovel supports are pivotal connected to the staff and also connected to a spring-loaded link system.

US3049180A discloses a safety trip for a cultivator or the like, wherein a shoe carrying a shovel is pivotal connected to a shank, the shovel and the shove held against tripping by a spring-loaded tripping mechanism.

A disadvantage with prior art is the lack of allowing the soil-working tool to be moved to a released, raised position when the implement carrying the tool is parked, the tool still being easy to reposition to a working position and remain there unaffected of any release systems.

The invention has for its object to remedy or to reduce at least one of the drawbacks of the prior art, or at least provide a useful alternative to prior art.

The object is achieved through features, which are specified in the description below and in the claims that follow.

The invention provides a plough sole breaker positioned behind a plough body, pivotal from an inactive position above the lower edge of a share defining a lower extension of the plough body, to an active position extending into the ground below the level defining the working depth of the plough body.

The plough sole breaker comprises a tine connected to the plough body by a bracket extending rearwardly from the plough body, preferably from a land side forming a vertical element defining the plough body towards the vertical side of the plough furrow, the tine being arranged to pivot about a transverse horizontal tilting axis between a downwardly directed working position and an inactive idle position wherein all of the tine is located above a level defined by a forward edge of a plough share, a first end portion of the tine being connected to the bracket. In the working position the tine may be forwardly slanted. In the idle position the tine may be in a rearwardly directed, supported position.

The first end portion of the tine is preferably forming a hub with a bore arranged to accommodate a shaft extending transversely from a rear end portion of the bracket, the centre axis of the shaft constituting the tilting axis. The axial displacement of the hub on the shaft is limited by a locking means, preferably in the form of a ring pin, a split pin or a tension pin to allow easy dismantling of the tine.

A tine support is extending transversely from a rear end portion of the bracket, arranged to abut a portion of the tine at least when the tine is in its working position. The tine support is preferably provided with side portions forming a cradle, arranged to stabilize the tine sidewise when in working position. A top face of the tine support may form a support for the tine when tilted to the rearwardly directed idle position.

In one embodiment, the hub has a stepped centre bore, a first bore portion facing the bracket having a radial clearance to the shaft, and a second bore portion bearing against a middle portion of the shaft, said first bore portion and the corresponding encircled portion of the shaft defining an annulus accommodating a compression spring, a first end of the compression spring abutting a surface forming a transition between the bore portions, and a second end of the spring abutting the bracket. An end face opposite the first bore is provided with two radial, diametrically opposite recesses arranged to rest against a pin extending through a radial through-bore in an end portion of the shaft. The pin is oriented to engage with the recesses when the tine is in its working position. The spring tends to maintain the engagement of the pin in the recesses and provides resistance when the tine is moved from its working position by the pin forcing the hub to be displaced against the spring. By tilting the tine 180 degrees, the pin reengages with the recesses, thereby locking the tine in an idle position. This embodiment is particularly preferred with reversible ploughs by the fact that the tine is locked in either of the working and idle positions, thus not being influenced by the reversing of the plough, i.e. by turning the plough up-side down on the headland thus shifting from right-hand plough bodies to left-hand bodies or vice versa being in working position.

The tine is preferably curved to improve the penetration in ground to be loosened.

When a plough provided with plough sole breakers according to the invention in their active positions is to be parked, typically with at least some plough bodies resting on the ground, the plough bodies are lowered to the ground while the plough is simultaneously moved backwards, thus causing the tines of the plough sole breakers to move from their downward directed working positions to a tilted position with their free end portions resting on the ground.

In case of the plough provided with plough sole breakers is to plough without the need of breaking the plough sole, the tines are tilted to their inactive idle positions.

In one embodiment, each tine may be provided with an actuator, e.g. a hydraulic cylinder, for remote operation of the tilting of the tines between their working positions to their idle positions and vice versa. Said actuators may be arranged to hold the tines in their working positions, the actuators being arranged with devices for individual release of the tines from their working position if overloaded.

The invention is defined by the independent patent claim. The dependent claims define advantageous embodiments of the invention.

More specifically, the invention relates to a plough sole breaker arranged to be connected to a plough body, extendable below a working depth of the plough body, the plough sole breaker comprising
a bracket arranged to be attached to the plough body, a forward portion of the bracket comprising attachment means,
a tine being connected to a rear end portion of the bracket, wherein
the tine is pivotal about a transverse, horizontal axis between a first orientation, where the tine is in an active working state extending downwardly, and a second orientation, where the tine is in an inactive idle state facing away from the first orientation.

The tine may in its first orientation be forwardly slanted in the direction from the transverse, horizontal axis towards a first tine end portion.

A tine support may extend transversely from the rear end portion of the bracket, arranged to abut an intermediate portion of the tine when in the first orientation.

A top surface of the tine support may be arranged to abut the intermediate portion of the tine when in the second orientation.

The tine support may comprise side wings arranged to support opposing sides of the tine.

A second end portion of the tine may be provided with a hub comprising a bore arranged to accommodate a shaft extending transversely from the rear end portion of the bracket, a centre axis of the shaft constituting the pivot axis of the tine.

The bore may be stepped, a first bore portion facing the bracket having a radial clearance to the shaft, and a second bore portion bearing against a portion of the shaft, said first bore portion and the corresponding encircled portion of the shaft defining an annulus accommodating a compression spring, a first end of the compression spring abutting a surface forming a transition between the bore portions, and a second end of the spring abutting the bracket; and an end face of the hub opposite the first bore may be provided with two radial, diametrically opposite recesses arranged to rest against a pin extending through a radial through-bore in an end portion of the shaft, the pin being oriented to engage with the recesses when the tine is in its first orientation.

A first end portion of the tine may be forwardly curved when in its first orientation.

An actuator may connect the bracket and a second end portion of the tine, the actuator being arranged for pivoting the tine from the first orientation to the second orientation and vice versa.

A linear actuator may connect the forward portion of the bracket and an arm extending from a second end portion of the tine at an angular direction in the range of 35 - 60 degrees relative the longitudinal centre axis of the tine and approximately perpendicular to the pivot axis of the tine, the linear actuator being arranged for pivoting the tine from the first orientation to the second orientation and vice versa.

The linear actuator may be a hydraulic cylinder. The hydraulic cylinder may be connected to a hydraulic circuit provided with one or more safety valves or one or more accumulators allowing each tine to release individually from its working position, pivoting backwards if overloaded.

In the following is described an example of a preferred embodiment illustrated in the accompanying drawings, wherein:
- Fig. 1: shows a perspective view of a plough body provided with a plough sole breaker according to a first embodiment of the invention in a working position;
- Fig. 2: shows an enlarged side view of the first embodiment of the plough sole breaker in a working position;
- Fig. 3: shows a side view of the first embodiment of the plough sole breaker in an idle state;
- Fig. 4: shows a side view of a second embodiment of the plough sole breaker in a working position;
- Fig. 5: shows a side view of the second embodiment of the plough sole breaker in a first idle state position;
- Fig. 6: shows an enlarged axial section VI-VI according to figure 4;
- Fig. 7: shows a side view of the second embodiment of the plough sole breaker in a second idle state position;
- Fig. 8: shows a perspective view of a plough body provided with a plough sole breaker according to a third embodiment of the invention in a working position;
- Fig. 9: shows a side view of the third embodiment of the plough sole breaker in a working position; and
- Fig. 10: shows a view of the third embodiment of the plough sole breaker in an idle state.

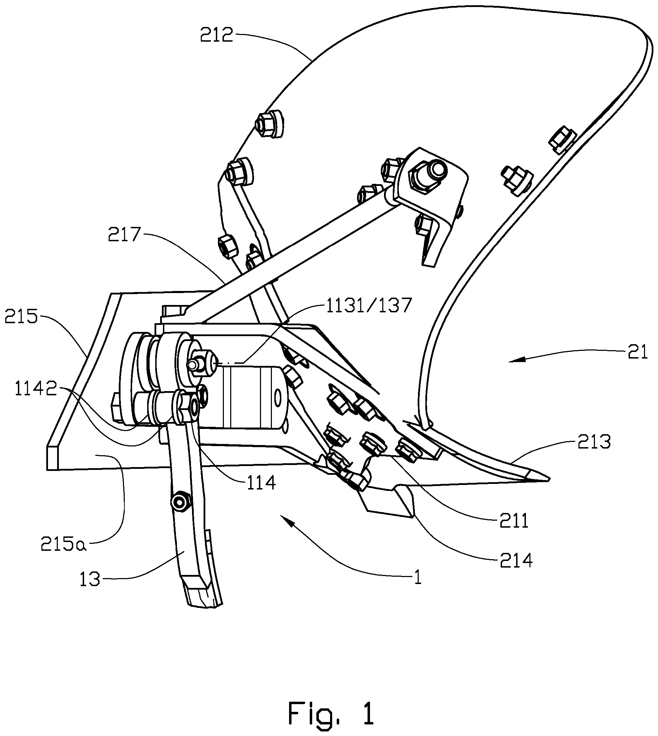

In figure 1 a plough body 21 of a plough (not shown) is depicted with a plough sole breaker 1 attached at an inner face 215a of a land side 215 of the plough body 21, more exactly to a plough body saddle 211 onto which is also attached a mouldboard 212 and a share 213 with a wearing point 214 forming a forward edge of the plough body 21. The plough body 21 is attached to an end portion of a beam leg (not shown), and a mouldboard stay 217 is forming a connection between a rear portion of the mouldboard 212 and the saddle 211.

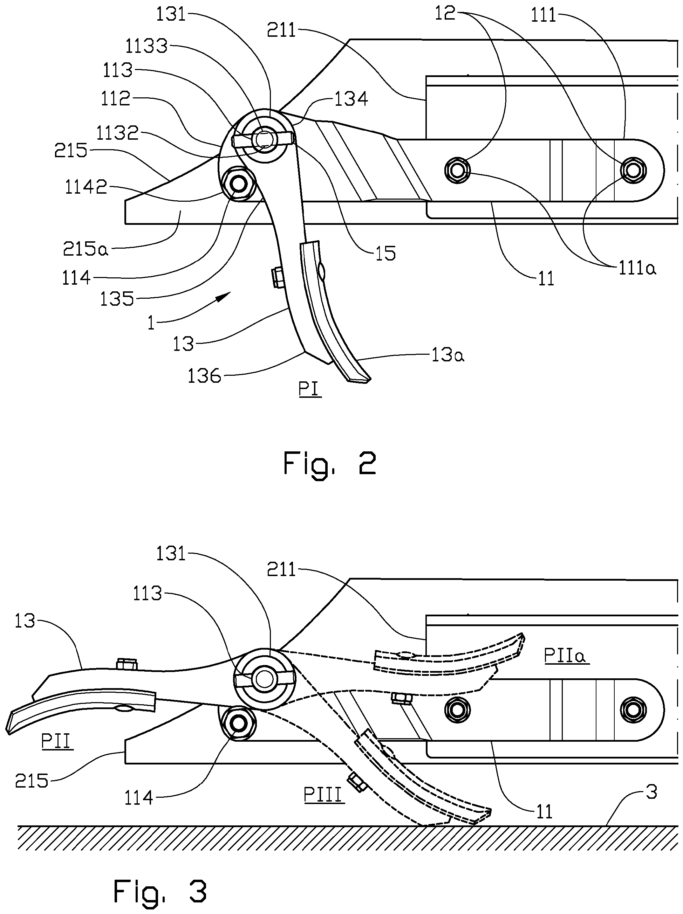

It is now referred to figures 2 and 3 for further details of a first embodiment of the plough sole breaker 1. A bracket 11 is provided with a forward end portion 111 and a rear end portion 112. The forward end portion 111 is provided with several through-holes 111a corresponding with holes (not shown) in a rear portion of the saddle 211 and in the land side 215 and arranged for receiving attachment means 12, preferably screws which are countersunk in the land side 215, thus leaving an outer side face of the land side 215 smooth and plane with no elements extending from said side face.

The rear bracket portion 112 is provided with a shaft 113 arranged approximately perpendicular to the land side 215 and extending away from the second, inner land side face 215b.

A tine 13 is provided with an exchangeable wearing part 13a releasably attached to a second tine end portion 136. An angle of attack of the wearing part 13a may also be adjustable, and the wearing part 1a may be displaceable in its longitudinal direction and possibly reversable to maintain its functionality when worn.

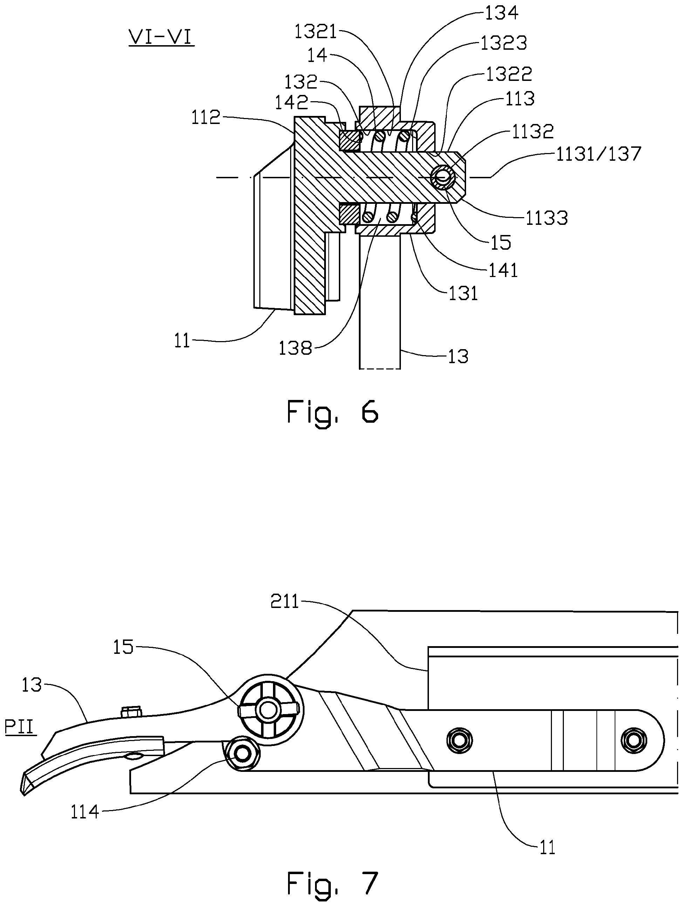

A first end portion 134 of the tine 13 remote the wearing part 13a is provided with a hub 131 arranged to bear smoothly on the shaft 113, the tine 13 extending perpendicularly from the shaft 113. A pivot axis 137 of the tine 13 is co-centric with a centre axis 1131 of the shaft 113 (see figures 1 and 6).

An end portion 1133 of the shaft 113 extending from an end portion 1133 of the tine hub 131 is provided with a radial through bore 1132 arranged to receive a locking means 15 extending from at least one end of the through bore 1132, thus securing the tine 13 on the bracket 11 in an axial direction of the shaft 113. The locking means 15 is preferably a ring pin, a split pin or a tension pin.

When arranged in a working state, an intermediate portion 135 of the tine 13 is resting against a forward face of a tine support 114, the tine support 114 here shown as a bolt extending from the rear bracket end portion 112 approximately parallel to and spaced apart from the shaft 113. The portion of the support 114 contacting the tine 13 may be U-shaped, providing even lateral support to the tine 13 by side wings 1142, in the embodiment shown as washers defining a collar (see even figure 1).

When the tine support 114 is a bolt, the rear bracket end portion 112 may be arranged with several bolt holes providing alternative positions of the tine support 114, thus allowing the angle of attach of the tine 13 to be changed.

If space allows the tine to pivot to a position PII shown in figure 3, a top face of the support 114 may support the tine 13 when in an idle state. Alternatively, the tine 13 is supported inside the saddle 211 when in an idle state according to position PIIA of figure 3, particularly when fitted to a reversible plough.

When the tine support 114 is a bolt extending from the rear bracket end portion 112, said bolt may be a shear bolt also providing overload protection, allowing the tine 13 to pivot backwards when the shear bolt breaks.

In its working state position PI, the tine 13 resting against the support 114, the tine 13 is preferably slanting in the working direction of the plough body 21, e.g. the free end of the tine 13 pointing in the direction of the share 213 of the plough 2, as shown in figure 2.

The disclosed first embodiment of the plough sole breaker 1 allows the plough with one or more plough bodies 21 to be lowered onto a parking site 3without the need of firstly tilting the tines 13 from their working state positions PI (see figure 2) to an intermediate state positions PIII like the one shown in figure 3 by slightly reversing and simultaneously lowering the plough to the ground, the coordinated shifting of the plough causing the tines 13 to be pivoted in a forward direction about the shafts 113 as the free ends of the tines 13 touches the ground.

For the purpose of ploughing without engaging the plough sole breakers 1, the tines 13 are tilted and parked in their idle state positions as shown in figure 3, resting against the top face of the support 114.

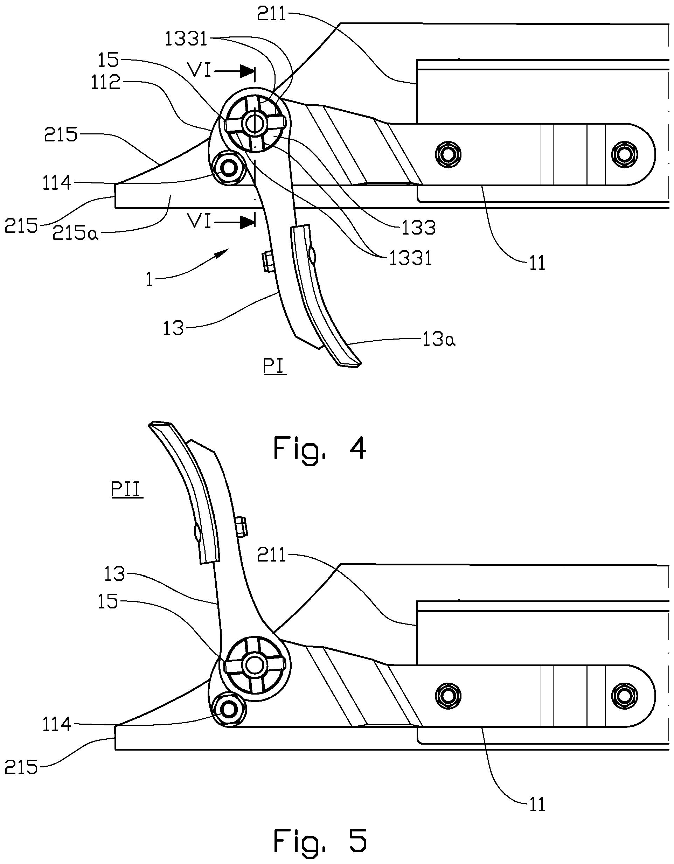

It is now referred to figures 4-6 for further details of a second embodiment of the plough sole breaker 1, wherein most of the features are identical to those of the first embodiment. However, in the second embodiment some features have been added, providing characteristics which causes this embodiment of the plough sole breaker 1 being suitable even for reversible ploughs.

In this second embodiment the tine hub 131 is provided with a stepped through-bore 132 perpendicular to a centre axis of the tine 13. A first bore portion 1321 has a diameter larger than that of a second bore portion 1322, the second bore portion 1322 being arranged to bear smoothly on the shaft 113. The first and second bore portions 1321, 1322 are co-centric. The first bore portion 1321 and the shaft 113 is defining an annulus 138 arranged to accommodate a spring 14, a first spring end 141 being supported by a spring contact face 1323 forming a radially extending transition portion from the larger diameter first bore portion 1321 to the smaller diameter second bore portion 1322. When connecting the tine 13 and the bracket 11, the spring 14 is entered onto the shaft 113, surrounding a portion of the shaft 113 with a second spring end 142 being axially supported by a portion of the bracket 11 from which the shaft 113 is extending.

The end portion 1133 of the shaft 113 is extending from the end portion 1133 of the tine hub 131. An end face 133 of the tine hub 131 is provided with opposing recesses 1331 arranged to receive the locking means 15 inserted in the through bore 1132 of the shaft 113 and extending from at least one end of the through bore 1132, thus securing the tine 13 on the bracket 11. The axial lengths of the spring 14 and the tine hub 131 allow the spring 14 to be tensioned at least when the tine 13 is tilted between a first orientation PI (see figure 4) and a second orientation PII or PIIA (see figure 5), by the axial displacement of the tine hub 13 when the recesses 1331 are moved away from meshing with the locking means 14.

In this embodiment the locking means 15 is preferably a tension pin offering accurate positioning of the locking means 15 in the axial direction of the through bore 1132.

The angular positions of the radial through bore 1132 of the shaft 11 and the recesses 1331 of the hub 13 is set according to a prescribed working state position I of the tine 13, the tine 13 preferably slanting in the working direction of the plough 2, e.g. the free end of the tine 13 pointing in the direction of the share 213 of the plough 2.

When arranged in the working state PI according to figure 4, the tine 13 is resting against the support 114.

Even the disclosed second embodiment of the plough sole breaker 1 allows the plough to be lowered onto a parking site 3 without the need of tilting the tines 13 from their working state positions PI according to figure 4 to their idle state positions PII according to figure 5 by slightly reversing and simultaneously lowering the plough to the ground, the coordinated shifting of the plough causing the recesses 1331 of the tine hubs131 to be released from engagement with the locking means 15 as the free ends of the tines 13 touches the ground and a forcing the tines 13 to be pivoted about the shafts 113.

For the purpose of ploughing without engaging the plough sole breakers 1, the tines 13 are tilted and locked in their idle state positions PII as shown in figure 5, the locking means 15 re-engaging with the hub recesses 1331, the tines 13 pointing up- and rearwards. In a situation wherein the layout of the plough 2 does not allow the tines 13 to be tilted as shown in figure 5, the tine hub 131 might be provided with a second set of recesses 1331 rotated an angle, i.e. 90 degrees, as shown in figure 4 and 5, thereby allowing the tines 13 to be locked pointing up- and forward.

Figure 7 shows the plough sole breaker according to the second embodiment is in a second idle state position PII, tilted further rearwards from the idle position shown in figure 5.

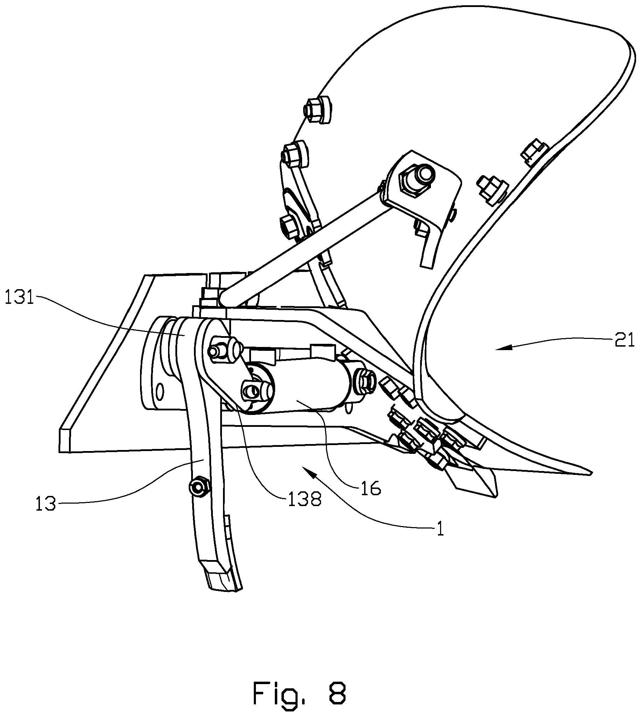

It is now referred to figures 8, 9 and 10 depicting a third embodiment of the sole breaker 1. The tine 13 is provided with an arm 139 extending from the tine hub 131 at an angular direction in the range of 35 - 60 degrees relative the longitudinal centre axis of the tine 13 and approximately perpendicular to the centre axis of the hub 131.

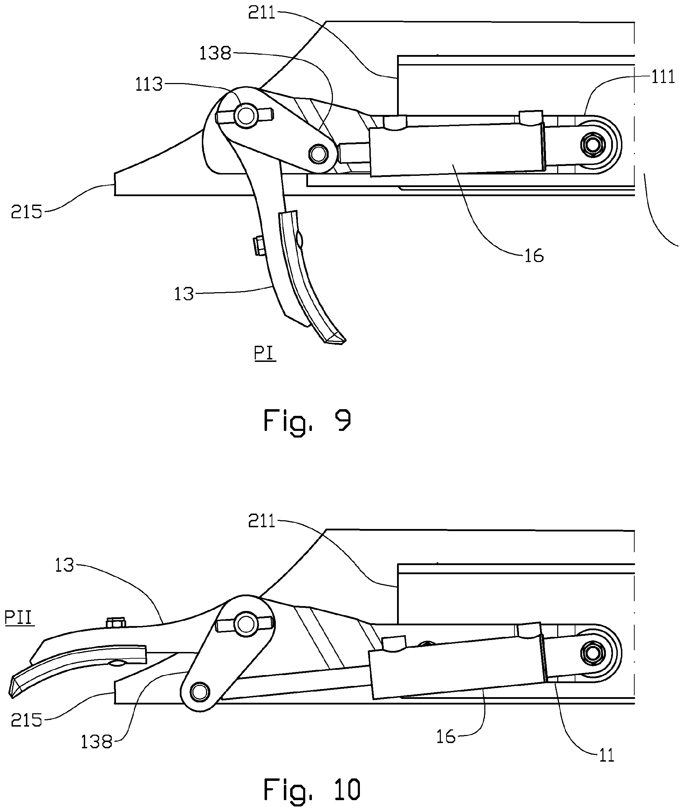

A linear actuator 16, here shown in the form of a hydraulic cylinder, is attached at the forward bracket end portion 111 and is extending to the tine arm 139, thus providing a connection between the tine arm 139 and the forward bracket end portion 111, allowing the tine 13 to be pivoted between a working position PI according to figure 9 and an idle position PII according to figure 10. When providing the linear actuator in the form of the hydraulic cylinder 16, a hydraulic circuit (not shown) connecting the actuator 16 to a hydraulic power plant (not shown), the hydraulic circuit is preferably provided with one or more safety valves or one or more accumulators allowing each tine 13 to release individually from its working position PI, pivoting backwards if overloaded, e.g. if hitting an immovable stone.

The disclosure comprises the subject matter described in the following clauses which may form the basis for claim amendments or future divisional applications:
Clause 1. A plough sole breaker (1) arranged to be connected to a plough body (21), extendable below a working depth of the plough body (21), the plough sole breaker (1) comprising a bracket (11) arranged to be attached to the plough body (21), a forward portion (111) of the bracket (11) comprising attachment means (12), a tine (13) being connected to a rear end portion (112) of the bracket (11), characterised in that the tine (13) is pivotal about a transverse, horizontal axis (137) between a first orientation (PI), where the tine (13) is in an active working state extending downwardly, and a second orientation (PII, PIIA), where the tine (13) is in an inactive idle state facing away from the first orientation (PI).
Clause 2. The plough sole breaker (1) according to clause 1, wherein the tine (13) in its first orientation (PI) is forwardly slanted in the direction from the transverse, horizontal axis (137) towards a first tine end portion (134).
Clause 3. The plough sole breaker (1) according to clause 1, wherein a tine support (114) is extending transversely from the rear end portion (112) of the bracket (11), arranged to abut an intermediate portion (135) of the tine (13) when in the first orientation (PI).
Clause 4. The plough sole breaker (1) according to clause 3, wherein a top surface (1141) of the tine support (114) is arranged to abut the intermediate portion (135) of the tine (13) when in the second orientation (PII).
Clause 5. The plough sole breaker (1) according to clause 3, wherein the tine support (114) comprises side wings (1142) arranged to support opposing sides of the tine (11).
Clause 6. The plough sole breaker (1) according to clause 1, wherein a second end portion (136) of the tine (13) is provided with a hub (131) comprising a bore (132) arranged to accommodate a shaft (113) extending transversely from the rear end portion 112) of the bracket (11), a centre axis (1131) of the shaft (113) constituting the pivot axis (137) of the tine (13).
Clause 7. The plough sole breaker (1) according to clause 6, wherein the bore (132) is stepped, a first bore portion (1321) facing the bracket (11) having a radial clearance to the shaft (113), and a second bore portion (1322) bearing against a portion of the shaft (113), said first bore portion (1321) and the corresponding encircled portion of the shaft (113) defining an annulus (138) accommodating a compression spring (14), a first end (141) of the compression spring (14) abutting a surface (1323) forming a transition between the bore portions (1321, 1322), and a second end (142) of the spring (14) abutting the bracket (11); and an end face (133) of the hub (13) opposite the first bore (1321) is provided with two radial, diametrically opposite recesses (1331) arranged to rest against a pin (15) extending through a radial through-bore (1131) in an end portion (1133) of the shaft (113), the pin (15) being oriented to engage with the recesses (1331) when the tine (13) is in its first orientation (PI).
Clause 8. The plough sole breaker (1) according to clause 1, wherein a first end portion (133) of the tine (13) is forwardly curved when in its first orientation (PI).
Clause 9. The plough sole breaker (1) according to clause 1, wherein an actuator (16) is connecting the bracket (11) and a second end portion (136) of the tine (13), the actuator (15) being arranged for pivoting the tine (13) from the first orientation (PI) to the second orientation (PII) and vice versa.
Clause 10. The plough sole breaker (1) according to clause 1, wherein a linear actuator (16) is connecting the forward portion (111) of the bracket (11) and an arm (139) extending from a second end portion (136) of the tine (13) at an angular direction in the range of 35 - 60 degrees relative the longitudinal centre axis of the tine (13) and approximately perpendicular to the pivot axis (137) of the tine (13), the linear actuator (16) being arranged for pivoting the tine (13) from the first orientation (PI) to the second orientation (Pllb) and vice versa.
Clause 11. The plough sole breaker (1) according to clause 10, wherein the linear actuator (16) is a hydraulic cylinder.
Clause 12. The plough sole breaker (1) according to clause 10, wherein the linear actuator (16) is a hydraulic cylinder connected to a hydraulic circuit provided with one or more safety valves or one or more accumulators allowing each tine (13) to release individually from its working position (PI), pivoting backwards if overloaded.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A plough sole breaker (1) arranged to be connected to a plough body (21), extendable below a working depth of the plough body (21), the plough sole breaker (1) comprising:
a bracket (11) arranged to be attached to the plough body (21), a forward portion (111) of the bracket (11) comprising attachment means (12), wherein
the bracket (11) is provided with a forward end portion (111) and a rear end portion (112); and
the bracket (11) is arranged to extend rearwardly from a land side (215) the plough body (21); and
a tine (13) being connected to a rear end portion (112) of the bracket (11), **characterised in that**
the tine (13) is pivotal about a transverse, horizontal axis (137) between a first orientation (PI), where the tine (13) is in an active working state extending downwardly, and a second orientation (PII, PIIA), where the tine (13) is in an inactive idle state facing away from the first orientation (PI).

2. The plough sole breaker (1) according to claim 1, wherein the rear bracket portion (112) is provided with a shaft (113) arranged to be approximately perpendicular to the land side (215) of the plough body (21) and extending away from an inner face (215a) of the land side (215) of the plough body (21).

3. The plough sole breaker (1) according to claim 1, wherein the plough sole breaker (1) is attached at an inner face (215a) of the land side (215) of the plough body (21), more exactly to a plough body saddle (211) of the plough body (21) onto which is also attached a mouldboard (212) of the plough body (21) and a share (213) of the plough body (21) with a wearing point (214) forming a forward edge of the plough body (21).

4. The plough sole breaker (1) according to claim 1, wherein the tine (13) in its first orientation (PI) is forwardly slanted in the direction from the transverse, horizontal axis (137) towards a first tine end portion (134).

5. The plough sole breaker (1) according to claim 1, wherein a tine support (114) is extending transversely from the rear end portion (112) of the bracket (11), arranged to abut an intermediate portion (135) of the tine (13) when in the first orientation (PI).

6. The plough sole breaker (1) according to claim 5, wherein a top surface (1141) of the tine support (114) is arranged to abut the intermediate portion (135) of the tine (13) when in the second orientation (PII).

7. The plough sole breaker (1) according to claim 5, wherein the tine support (114) comprises side wings (1142) arranged to support opposing sides of the tine (11).

8. The plough sole breaker (1) according to claim 1, wherein a second end portion (136) of the tine (13) is provided with a hub (131) comprising a bore (132) arranged to accommodate a shaft (113) extending transversely from the rear end portion 112) of the bracket (11), a centre axis (1131) of the shaft (113) constituting the pivot axis (137) of the tine (13).

9. The plough sole breaker (1) according to claim 8, wherein
the bore (132) is stepped, a first bore portion (1321) facing the bracket (11) having a radial clearance to the shaft (113), and a second bore portion (1322) bearing against a portion of the shaft (113), said first bore portion (1321) and the corresponding encircled portion of the shaft (113) defining an annulus (138) accommodating a compression spring (14), a first end (141) of the compression spring (14) abutting a surface (1323) forming a transition between the bore portions (1321, 1322), and a second end (142) of the spring (14) abutting the bracket (11); and
an end face (133) of the hub (13) opposite the first bore (1321) is provided with two radial, diametrically opposite recesses (1331) arranged to rest against a pin (15) extending through a radial through-bore (1131) in an end portion (1133) of the shaft (113), the pin (15) being oriented to engage with the recesses (1331) when the tine (13) is in its first orientation (PI).

10. The plough sole breaker (1) according to claim 1, wherein a first end portion (133) of the tine (13) is forwardly curved when in its first orientation (PI).

11. The plough sole breaker (1) according to claim 1, wherein an actuator (16) is connecting the bracket (11) and a second end portion (136) of the tine (13), the actuator (15) being arranged for pivoting the tine (13) from the first orientation (PI) to the second orientation (PII) and vice versa.

12. The plough sole breaker (1) according to claim 1, wherein a linear actuator (16) is connecting the forward portion (111) of the bracket (11) and an arm (139) extending from a second end portion (136) of the tine (13) at an angular direction in the range of 35 - 60 degrees relative the longitudinal centre axis of the tine (13) and approximately perpendicular to the pivot axis (137) of the tine (13), the linear actuator (16) being arranged for pivoting the tine (13) from the first orientation (PI) to the second orientation (Pllb) and vice versa.

13. The plough sole breaker (1) according to claim 12, wherein the linear actuator (16) is a hydraulic cylinder.

14. The plough sole breaker (1) according to claim 12, wherein the linear actuator (16) is a hydraulic cylinder connected to a hydraulic circuit provided with one or more safety valves or one or more accumulators allowing each tine (13) to release individually from its working position (PI), pivoting backwards if overloaded.
